# EUROPÄISCHE PATENTANMELDUNG

(11) **EP 0 766 173 A1**
(43) Veröffentlichungstag der Anmeldung: **02.04.1997**
(21) Anmeldenummer: 96113355.0
(22) Anmeldetag: 21.08.1996
(51) Int. Cl.: G06F 11/00

(54) **Emulationsvorrichtung**

(30) Priorität: 30.09.1995 DE 19536622
(71) Anmelder: KONTRON ELEKTRONIK GMBH, D-85386 Eching (DE)
(72) Erfinder: Horak, Dieter, 85368 Moosburg (DE); Hofmeister, Jürgen, 85354 Freising (DE); Pichl, Werner, 85386 Eching (DE); Schmitt, Wolfgang, 85354 Freising (DE); Hübner, Christian, 85221 Dachau (DE); Habermayr, Erwin, 86697 Oberhausen (DE)
(74) Vertreter: Dirscherl, Josef

(57) **Zusammenfassung**

Bei einer Emulationsvorrichtung zur Emulation eines Zielsystems mit einer Emulatorhaupteinheit, an die eine externe Steckeinheit angeschlossen ist, die den Emulationsprozessor aufweist und die anstelle des Zielsystemprozessors in das Zielsystem einsteckbar ist, um das Zielsystem mit der Emulatorhaupteinheit zu verbinden, sind die Funktionseinheiten der Emulatorhaupteinheit zur Durchführung zeitkritischer Funktionen in einem integrierten Baustein zusammengefaßt und in die Steckeinheit verlagert.

## Beschreibung

Die Erfindung bezieht sich auf eine Emulationsvorrichtung nach dem Oberbegriff des Patentanspruchs 1.

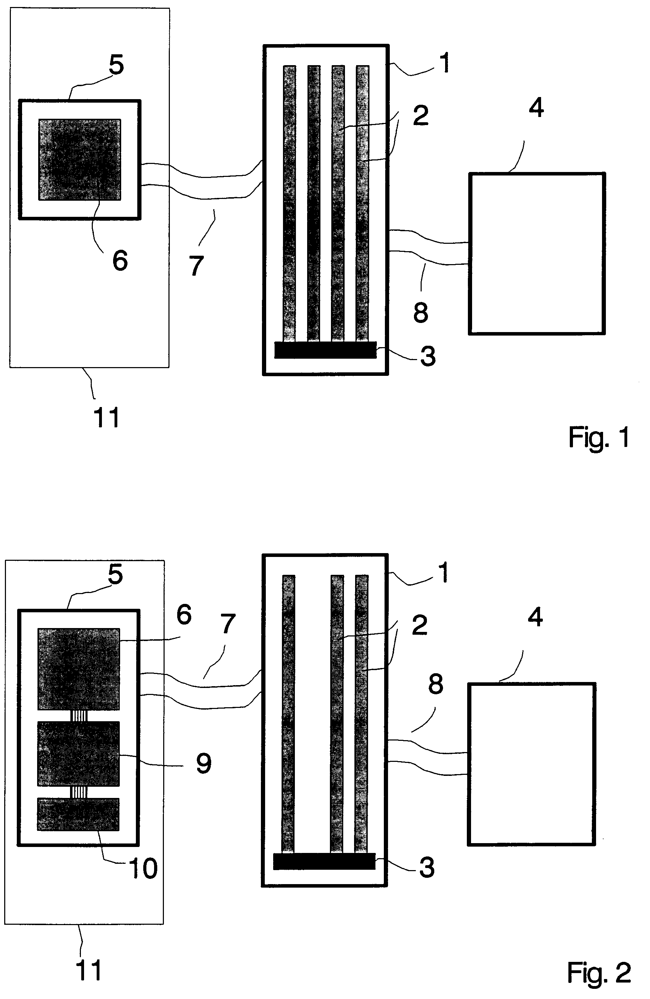

Eine derartige Emulationsvorrichtung ist beispielsweise durch den KSE 5 Emulator der Firma Kontron Elektronik GmbH (Hardware Reference Manual KSE-5700-01, Januar 1989) bekannt. Eine derartige bekannte Emulationsvorrichtung ist schematisch in Fig. 1 dargestellt. Eine Emulatorhaupteinheit 1 weist eine Vielzahl von elektronischen Steckkarten 2 auf, die über eine Rückwandverdrahtung 3 miteinander verbunden sind. Über einen Verbindungsabschnitt 8 ist die Emulatorhaupteinheit 1 mit einer Emulatorbedieneinheit 4, die üblicherweise ein Personal Computer ist, verbunden.

Über einen weiteren Verbindungsabschnitt 7 ist die Emulatorhaupteinheit 1 mit einer Steckeinheit 5 verbunden, auf der der Emulationsprozessor 6 befestigt ist. Die Steckeinheit 5 mit dem Emulationsprozessor 6 ist in ein Zielsystem 11 anstelle des Zielsystemprozessors einsteckbar. Das Zielsystem 11 ist beispielsweise eine prozessorgesteuerte Anwendungsschaltung. Der Verbindungsabschnitt 7 in Form einer Kabelanordnung weist für eine flexible Handhabung der Steckeinheit 5 vorzugsweise eine Länge von ca. 1 m auf. Werden beispielsweise Daten des Zielsystems 11 an Bauteile der elektronischen Steckkarten 2 übertragen, müssen die Signale die Steckeinheit 5, den Verbindungsabschnitt 7 und die Rückwandverdrahtung 3 überwinden. Durch derart lange Signalwege können sich die physikalischen Signallaufzeiten zu Beträgen aufsummieren, die größer sind als eine Taktperiode des jeweils verwendeten Emulationsprozessors 6. Dadurch kann es zu Fehlfunktionen oder Funktionseinschränkungen kommen.

Es ist Aufgabe der Erfindung, eine Emulationsvorrichtung eingangs genannter Art derart zu verbessern, daß Fehlfunktionen aufgrund von Laufzeitproblemen verhindert werden, indem die physikalischen Signallaufzeiten minimiert werden.

Diese Aufgabe wird durch die kennzeichnenden Merkmale des Patentanspruchs 1 gelöst.
Erfindungsgemäß sind Funktionseinheiten der Emulatorhaupteinheit zur Durchführung zeitkritischer Funktionen in mindestens einem integrierten Baustein zusammengefaßt und in die Steckeinheit verlagert.

Da üblicherweise sämtliche Funktionseinheiten auf den elektronischen Steckkarten 2 der Emulatorhaupteinheit 1 vorgesehen sind, können die Signallaufzeiten durch Einsparung des Weges über die Rückwandverdrahtung 3 und den Verbindungsabschnitt 7 erheblich verkürzt werden.

Erfindungsgemäß werden unter zeitkritischen Funktionen beispielsweise ein schneller Speicherzugriff und/oder ein schneller Befehls- und Datentransfer verstanden. Durch die erfindungsgemäße Emulationsvorrichtung wird der Speicherzugriff und oder der Datentransfer, der beim Stand der Technik zwischen der Emulatorhaupteinheit und der Steckeinheit oder zwischen der Emulatorhaupteinheit und dem Zielsystem stattfindet, nunmehr allein auf der Steckeinheit oder zwischen der Steckeinheit und dem Zielsystem durchgeführt. Zur Verkürzung der Signallaufzeiten hinzu weist die erfindungsgemäße Vorrichtung den weiteren Vorteil auf, daß insbesondere durch die Verhinderung der Signalläufe über den Verbindungsabschnitt 7 eine fehlerhafte Signalübertragung aufgrund externer Störeinflüsse, wie z. B. elektromagnetische Einstrahlung, ausgeschlossen wird.

Eine vorteilhafte Weiterbildung der Erfindung ist der Gegenstand des Patentanspruchs 2.
Demgemäß ist in einem integrierten Baustein eine zusätzliche Funktionseinheit vorgesehen, die einen Datentransferzwischenspeicher für eine bidirektionale, blockweise Daten- und/oder Befehlsübertragung zwischen dem Zielsystem und der Emulatorbedieneinheit aufweist.
Hierdurch wird auch ein schnellerer Daten- und Befehlstransfer zwischen dem Zielsystem und der Emulatorbedieneinheit gegenüber einem bisher üblichen Einzeldaten- bzw. Einzelbefehlstransfer erreicht.

In der Zeichnung ist ein Ausführungsbeispiel der Erfindung dargestellt. Es zeigt:
- Fig. 2: eine erfindungsgemäße Gesamtanordnung und
- Fig. 3: mögliche in den integrierten Baustein verlagerte Funktionseinheiten der Emulatorhaupteinheit.

In Fig. 2 sind die mit Fig. 1 übereinstimmenden Teile mit gleichen Bezugszeichen versehen. Fig. 2 unterscheidet sich von dem in Fig. 1 dargestellten Stand der Technik dadurch, daß die Steckeinheit 5 zum Emulationsprozessor 6 hinzu einen integrierten Baustein 9 und einen Speicher 10 aufweist. Der integrierte Baustein 9 kann beispielsweise ein ASIC (Application Specific Integrated Circuit) oder ein programmierbarer integrierter Logikbaustein, z. B. ein FPGA, EPLD, PLD usw., sein. Funktionseinheiten zur Durchführung zeitkritischer Funktionen, die beim Stand der Technik in den elektronischen Steckkarten 2 enthalten sind, sind in Fig. 2 in den integrierten Baustein 9 verlagert. Der Speicher 10 kann optional, z. B. als Simulations- oder als Überwachungsprogrammspeicher, auf der Steckeinheit 5 vorgesehen sein.

In der Emulatorhaupteinheit 1 wird durch die Auslagerung wesentlicher Funktionsumfänge die Möglichkeit für optionale Funktionserweiterungen geschaffen, die beispielsweise bauteilgrößenbedingt auf der Steckeinheit 5 nicht integrierbar sind. Ist beispielsweise für die Untersuchung großer Programme des Zielsystems 11 der Speicher 10 auf der Steckeinheit 5 nicht ausreichend, kann in der Emulatorhaupteinheit 1 ein großer Simulationsspeicher und/oder ein großer Speicher zur Aufzeichnung des durch das Zielsystem 11 ausgeführten Programmablaufs vorgesehen werden. Auch zukünftige Funktionserweiterungen können sehr schnell durch neue Steckkarten 2 in der Emulatorhaupteinheit 1 realisiert werden, da nicht zwingend bei jeder Änderung eine Neukonstruktion der Steckeinheit 5 bzw. des integrierten Bausteins 9 notwendig ist. Hierdurch ist eine sehr flexible Gesamt-Emulationsvorrichtung geschaffen.

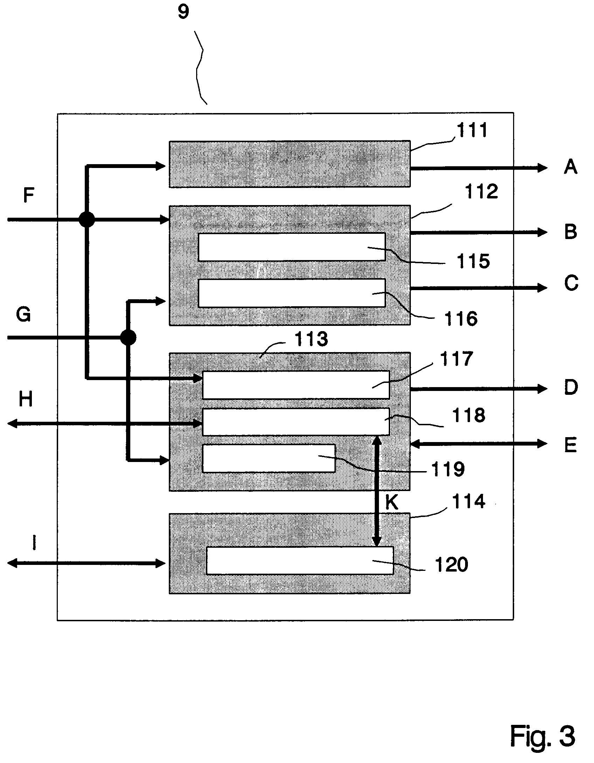

In Fig. 3 sind Beispiele von in den Baustein 9 verlagerten Funktionseinheiten, wie die Unterbrechungssignalerzeugungseinheit 111, die Adreßblockauswahleinheit 112, die Schnittstelleneinheit 113 zum Speicher 10 und die Schnittstelleneinheit 114 zur Emulatorbedieneinheit 4, dargestellt.

Die Unterbrechungssignalerzeugungseinheit 111 erzeugt ein Unterbrechungssignal, bevor der Zugriff des Simulationsprozessors 6 auf eine ausgewählte Adresse abgeschlossen werden kann ( 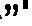 break before execute").

Die Adreßblockauswahleinheit 112 besteht aus einer Datenbusfreischaltungseinheit 115 und einer Wartesignalerzeugungseinheit 116. Die Datenbusfreischaltungseinheit 115 schaltet Datenbusse für den Zugriff des Emulationsprozessors 6 auf vorgegebene Adreßblöcke im Zielsystem 11 oder auf dem Speicher 10 frei. Die Wartesignalerzeugungseinheit 116 erzeugt bei einem Zugriff des Emulationsprozessors 6 auf einen ausgewählten Adreßblock ein Wartesignal mit vom Benutzer über die Emulatorbedieneinheit 4 einstellbarer Dauer.

Die Schnittstelleneinheit 113 zum Speicher 10 der Steckeinheit 5 weist eine Speicheradreßsteuereinheit 117, eine Datenschnittstelleneinheit 118 und eine Steuereinheit 119 auf. Die Speicheradreßsteuereinheit 117 steuert den Zugriff des Emulationsprozessors 6 auf den Speicher 10 der Steckeinheit 5. Die Datenschnittstelleneinheit 118 übermittelt Daten zwischen der Schnittstelleneinheit 113 und dem Speicher 10. Die Steuereinheit 119 dient zur Einstellung der Datenbusbreite in Abhängigkeit von ausgewählten Speicherbereichen.

Über die Schnittstelleneinheit 114 zur Emulatorbedieneinheit 4 sind die in dem integrierten Baustein 9 zusammengefaßten Funktionen vom Benutzer einstellbar. Die Schnittstelleneinheiten 113 und 114 tauschen über einen Kommunikationsbus K Daten aus.

Der integrierte Baustein 9 weist eine Vielzahl von Ein- und Ausgängen A bis I auf. Über den Ausgang der Unterbrechungssignalerzeugungseinheit 111 werden Unterbrechungssignale A übermittelt, über die Ausgänge der Adreßblockauswahleinheit 112 werden Adreßblocksignale B sowie Steuersignale C gesendet. Am Ausgang der Speicheradreßsteuereinheit 117 ist der Adreßbus D zum Speicher 10 angeschlossen. Ein- und Ausgangssignale der Datenschnittstelleneinheit 118 werden über den bidirektionalen Datenbus E zum Speicher 10 übermittelt. Weiterhin findet ein bidirektionaler Signallauf zwischen der Datenschnittstelleneinheit 118 und dem Emulationsprozessor 6 über den Emulationsprozessor-Datenbus H statt. Ebenso besteht eine bidirektionale Verbindung I zwischen der Schnittstelleneinheit 114 und der Emulatorbedieneinheit 4. Die Schnittstelleneinheit 114 weist einen Datentransferzwischenspeicher 120 auf, der zum schnellen Austausch von Daten oder Programmbefehlen zwischen der Emulatorbedieneinheit 4 und dem Zielsystem 11 oder zwischen der Emulatorbedieneinheit 4 und dem Speicher 10 dient.

Durch die Schnittstelleneinheit 114 und den Datentransferzwischenspeicher 120 kann ein blockweiser Daten- und Befehlsaustausch zwischen der Emulatorbedieneinheit 4 und dem Zielsystem 11 anstelle des bisher üblichen Einzeldatentransfers stattfinden. Hierdurch reduziert sich die Übertragungshäufigkeit und damit die Gesamtübertragungszeit für den Daten- und Befehlstransfer zwischen der Emulatorbedieneinheit 4 und dem Zielsystem 11. Auch wird gleichzeitig die Zeit verkürzt, für die bei diesem Daten- und Befehlstransfer die Emulations-Programmausführung unterbrochen werden muß.

Ein Emulationsprozessoradreßbus F übermittelt Eingangssignale an die Unterbrechungssignalerzeugungseinheit 111, an die Adreßblockauswahleinheit 112 und an die Speicheradreßsteuereinheit 117. Emulationsprozessorsteuersignale G sind Eingangssignale der Adreßblockauswahleinheit 112 und der Schnittstelleneinheit 113.

Durch den auf die Steckeinheit 5 aufgebrachten integrierten Baustein 9 mit den Funktionseinheiten 111, 112, 113 und 114 zur Durchführung zeitkritischer Funktionen wird eine erhebliche Reduzierung von Signallaufzeiten bei Speicherzugriffen erreicht. Die Ausführung von Überwachungsprogrammen, die ablaufen während die Ausführung des zu testenden Programms im Zielsystem angehalten ist, können erheblich beschleunigt werden.

Ergänzend wird im folgenden eine Liste der englischen Übersetzungen der im Ausführungsbeispiel verwendeten Begriffe aufgeführt, da für Emulationsvorrichtungen vorwiegend englischsprachige Literatur existiert:
- Emulator-Haupteinheit 1: = System Emulator
- Elektronische Steckkarten 2: = Boards
- Rückwandverdrahtung 3: = Backplane
- Emulatorbedieneinheit 4: = Host
- Steckeinheit 5: = Emulator Probe
- Emulationsprozessor 6: = Central Prozessing Unit (CPU)
- Speicher 10: = Probe Memory
- Zielsystem 11: = Target System
- Emulatorzentraleinheit 12: = In-Circuit-Emulator
- Unterbrechungssignalerzeugungseinheit 111: = Adress Break Unit
- Adreßblockauswahleinheit 112: = Adress Map Unit
- Schnittstelleneinheit 113 zum Speicher 10: = Probe Memory Interface
- Schnittstelle 114 zur Emulatorbedieneinheit 4: = Host Interface
- Datenbusfreischaltungseinheit 115: = Mapper
- Wartesignalerzeugungseinheit 116: = Waitestate Generator
- Speicheradreßsteuereinheit 117: = Memory Adress Control
- Datenschnittstelle 118 zum Speicher 10: = Memory Data Interface
- Steuereinheit 119 zur Einstellung der Datenbusbreite: = Bus Size Control
- Datentransferzwischenspeicher 120: = Data Transfer Buffer
- Unterbrechungssignale A: = Break Signals
- Adreßblocksignale B: = Map Signals
- Steuersignale C: = Control Signals
- Adreßbus D zum Speicher 10: = Probe Memory Adress Bus
- Datenbus E zum Speicher 10: = Probe Memory Data Bus
- Emulationsprozessor-Adreßbus F: = CPU Adress Bus
- Emulationsprozessor-Steuersignalbus G: = CPU Control Signals
- Emulationsprozessor-Datenbus H: = CPU Data Bus
- Datentransferbus I zur Emulatorbedieneinheit 4: = Host Interface Bus

## Patentansprüche

1. Emulationsvorrichtung zur Emulation eines Zielsystems mit einer Emulatorhaupteinheit, an die eine externe Steckeinheit angeschlossen ist, die den Emulationsprozessor aufweist und die anstelle des Zielsystemprozessors in das Zielsystem einsteckbar ist, um das Zielsystem mit der Emulatorhaupteinheit zu verbinden, dadurch gekennzeichnet, daß daß Funktionseinheiten (111, 112, 113,) der Emulatorhaupteinheit (1) zur Durchführung zeitkritischer Funktionen in einem integrierten Baustein (9) zusammengefaßt und in die Steckeinheit (5) verlagert sind.

2. Emulationsvorrichtung nach Patentanspruch 1,
dadurch gekennzeichnet, daß in einem integrierten Baustein (9) eine zusätzliche Funktionseinheit (114) vorgesehen ist, die einen Datentransferzwischenspeicher (120) für eine bidirektionale blockweise Daten- und Befehlsübertragung zwischen dem Zielsystem (11) und einer Emulatorbedieneinheit (4) aufweist.
